# EUROPEAN PATENT APPLICATION

(11) **EP 0 916 259 A1**
(43) Date of publication of application: **19.05.1999**
(21) Application number: 98203762.4
(22) Date of filing: 06.11.1998
(51) Int. Cl.: A01M 7/00

(54) **Field-spraying apparatus**

(30) Priority: 07.11.1997 NL 1007494
(71) Applicant: Sieger-HD B.V., 9645 LA Veendam (NL)
(72) Inventor: Steenbeek, Roelof, 9051 LX Stiens (NL)
(74) Representative: Ottevangers, Sietse Ulbe

(57) **Abstract**

Field-spraying apparatus (1) for spraying plots of land planted with cultivated plants with plant protection agents and the like, comprising at least one elongated arm provided with spraying nozzles which in the operating condition extends transversely to the direction of travel of the field-spraying apparatus, the spraying nozzles being fed by means of a ring main (14) and one or more section cocks (9-13) with an agent to be sprayed. The ring main (14) has a portion connected to the section cocks (9-13) having a central portion which, via a central feed line, is connected to a main supply member, and a portion which is remote from said portion and which is connected, via an additional line section, to the main supply member. The main supply member is connected, via a multiple cock, to the central feed line and to the additional line section, the multiple cock having at least a first position in which only the central feed line is connected to the main supply member, and a second position in which the additional line section is connected to the main supply member.

## Description

The invention relates to a field-spraying apparatus for spraying plots of land planted with cultivated plants with plant protection agents and the like, said apparatus comprising at least one elongated arm provided with spraying nozzles which in the operating condition extends transversely to the direction of travel of the field-spraying apparatus, the spraying nozzles being fed by means of a ring main with an agent to be sprayed.

Such field-spraying apparatus are known from practice. Field-spraying apparatus are typically arranged for being carried along on a tractor across a field to be treated. In principle, a self-travelling construction or a drawn construction provided with wheels is also possible. The apparatus normally comprises a storage vessel for the agent to be sprayed, one or more pumps, mixing cocks, a clean-water tank, a cleaning and rinsing system, etc. A field-spraying apparatus further usually comprises a number of sections which can be folded in and out and which carry the spraying nozzles, and which in the operating condition extend transversely relative to the travelling direction of the tractor. The spraying apparatus can be set for evenly spraying the area to be treated. When plants are arranged in rows, the plants, or conversely the strips between the plant rows, or both, can be sprayed. Apart from plant protection agents, other agents, such as liquid or water-dissolved food agents for the plants or water or the like, can of course be distributed as well.

As the fold-out sections may have a considerable length in the operating condition, the use of hoses which lead to the different sections and which have different lengths and are coupled to a central supply line at the beginning of a spraying cycle, or the changeover from one agent to the other and the like, would cause an irregular spraying pattern in that the spraying agent does not reach the different sections simultaneously. To overcome these and other problems, modern field-spraying apparatus comprise a ring main system which is connected to the central supply line and which is connected, via a number of spaced apart cocks, to associated sections of the spraying arms. This construction makes it possible that before the spraying operation is started, the ring main is first filled entirely with the agent to be sprayed and the cocks of the sections of the spraying arms are subsequently opened simultaneously. All spraying nozzles can then be provided with the spraying agent substantially at the same point of time, so that when the operation is started, an even supply of plant protection agent or the like is realized.

However, a drawback of the use of such ring main system is that rinsing out the ring main system is a troublesome affair and takes a relatively long time. Rinsing out is for instance desired when a spraying operation is ended or when a different product is changed over to.

The object of the invention is to overcome the above drawback and generally to provide an efficiently operating field-spraying apparatus. To this end, according to the invention, a field-spraying apparatus of the type described is characterized in that the ring main has a portion connected to the section cocks having a central portion which, via a central feed line, is connected to a main supply member, and a portion which is remote from said portion and which is connected, via an additional line section, to the main supply member, and that the main supply member is connected, via a multiple cock, to the central feed line and to the additional line section, the multiple cock having at least a first position in which only the central feed line is connected to the main supply member, and a second position in which the additional line section is connected to the main supply member.

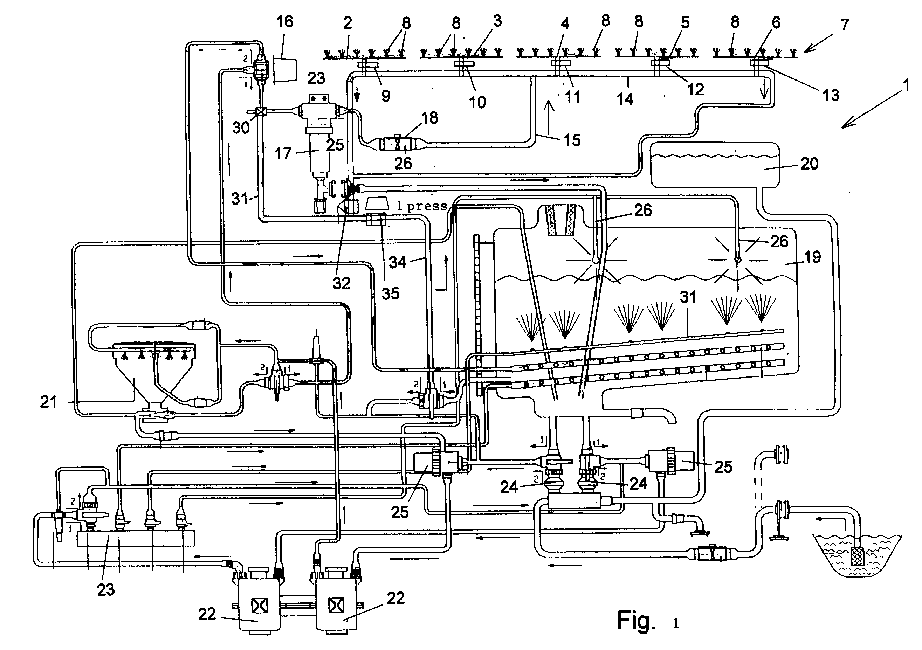

Hereinafter, the invention will be specified with reference to the accompanying drawing. The single Figure of the drawing schematically shows an example of a field-spraying apparatus. The apparatus 1 shown comprises a spraying arm 7 built up of five sections 2-6. Each section carries a number of spraying nozzles 8. The sections 2-6 are each connected, via a section cock 9-13, to a ring main 14. In the example shown, a feed line 15 opens centrally into the part of the ring main that is connected to the section cocks, which feed line 15 is connected to a main cock 16. In the feed line, there are further present, between the main cock 16 and the connecting location to the ring main, a customary self-cleaning filter 17 and a flow-through sensor 18. In a known manner, the main cock 16 is connected to the line system of the spraying apparatus 1, which further comprises, inter alia, a main tank 19, a clean-water tank 20, a mixing vessel 21 for chemicals and the like, pumps 22, a stirring cock block 23, suction cocks 24, suction filters 25, cleaning and flushing means 26 and associated lines and accessories. This portion of the spraying apparatus can be constructed in conformity with the known technique and is therefore not described in detail.

According to the invention, the feed line 15 is connected to the main cock 16 via an additional cock 30. In the example shown, the cock 30 is located between the main cock 16 and the self-cleaning filter 17. Further, an additional line section 31 is connected to the additional cock 30, which additional line section connects the additional cock to a part of the ring main 14 remote from the spraying nozzles. Consequently, the additional line section in fact communicates with both ends of the part of the ring main which is connected to the section cocks.

The additional cock 30 is designed as multiple cock such that it can selectively connect the main cock to the feed line or to the ring main or to both.

Through a suitable control of the multiple cock, the ring main and the spraying arm with the spraying nozzles can very rapidly be rinsed out with water and/or cleaning liquid and, if so desired, filled with a different spraying agent.

During normal operation, the multiple cock for instance exclusively connects the feed line 15 to the main cock. However, if the ring main and the spraying arm should be rinsed out, the multiple cock can connect the main cock 16 to the feed line as well as to the additional line section 31. In that case, the liquid is fed to the center of the part of the ring main connected to the section cocks as well as to the ends thereof. When section cocks are open, the spraying arm and also the ring main are rinsed with force.

The multiple cock can also be set in a position such that only the additional line section is connected to the ring main. Then, too, a rapid rinsing of the ring main is possible, while the section cocks may or may not be closed. When section cocks are closed, the feed line 15 and the filter 17 can be cleaned in reverse direction.

In the example shown, the additional line section further comprises a pressure or flow-through sensor 32, a return line 34 and a pressure regulator 35.

It is observed that after the foregoing, various modifications will readily occur to a person skilled in the art. Such modifications are understood to fall within the framework of the invention.

## Claims

1. A field-spraying apparatus for spraying plots of land planted with cultivated plants with plant protection agents and the like, comprising at least one elongated arm provided with spraying nozzles which in the operating condition extends transversely to the direction of travel of the field-spraying apparatus, the spraying nozzles being fed by means of a ring main and one or more section cocks with an agent to be sprayed, **characterized in that** the ring main has a portion connected to the section cocks having a central portion which, via a central feed line, is connected to a main supply member, and a portion which is remote from said portion and which is connected, via an additional line section, to the main supply member, and that the main supply member is connected, via a multiple cock, to the central feed line and to the additional line section, the multiple cock having at least a first position in which only the central feed line is connected to the main supply member, and a second position in which the additional line section is connected to the main supply member.

2. A field-spraying apparatus according to claim 1, **characterized in that** the multiple cock has a third position, in which both the additional line section and the central feed line are connected to the main supply member.

3. A field-spraying apparatus according to claim 1 or 2, **characterized in that** the central feed line comprises a filter.

4. A field-spraying apparatus according to any one of the preceding claims, **characterized in that** the additional line section comprises a pressure sensor or a flow-through sensor.

5. A field-spraying apparatus according to any one of the preceding claims, **characterized in that** the central feed line comprises a flow-through sensor.

6. A field-spraying apparatus according to any one of the preceding claims, **characterized in that** the additional line section is connected to a return line.

7. A field-spraying apparatus according to any one of the preceding claims, **characterized in that** a pressure regulator is provided.

8. A field-spraying apparatus according to any one of the preceding claims, **characterized in that** the main supply member comprises a cock.
